# EUROPEAN PATENT APPLICATION

(11) **EP 4 841 692 A1**
(43) Date of publication of application: **18.11.2026**
(21) Application number: 25907159.5
(22) Date of filing: 19.12.2025
(51) Int. Cl.: H01M 4/136, H01M 4/58, H01M 4/62, H01M 10/0569, H01M 10/0525, H01M 4/04, H01M 4/02

(54) **ELECTRODE AND SECONDARY BATTERY COMPRISING SAME**

(30) Priority: 20.12.2024 KR 20240192947
(71) Applicant: LG Energy Solution, Ltd., Seoul 07335 (KR)
(72) Inventor: SHIN, Dong Mok, Daejeon 34122 (KR); LEE, Ki Seok, Daejeon 34122 (KR); JEONG, Hyeok, Daejeon 34122 (KR); BAEK, Doo Hyun, Daejeon 34122 (KR); CHUNG, Koo Seung, Daejeon 34122 (KR); PARK, Jee Hyun, Daejeon 34122 (KR)
(74) Representative: Goddar, Heinz J.
(86) International application number: PCT/KR2025/022433
(87) International publication number: WO 2026/135387

(57) **Abstract**

The present invention discloses a technology relating to an electrode including an electrode active material and a binder having a three-dimensional fiber network structure, and having a maximum instantaneous absorption rate of an electrolyte of 1.3 µg/s or more in electrolyte absorption analysis. The electrode may enable high loading by reducing diffusion resistance through excellent lithium ion mobility, may prevent localized degradation of the active material induced under high C-rate conditions, and may enable a secondary battery exhibiting excellent output and fast charging performance.

## Description

### TECHNICAL FIELD

The present invention discloses a technology relating to an electrode and a secondary battery including the electrode.

### BACKGROUND ART

Secondary batteries are used in various categories including small-sized products such as digital cameras, P-DVDs, MP3Ps, mobile phones, PDAs, portable game devices, power tools, and E-bikes as well as large-sized products requiring high power such as electric vehicles and hybrid vehicles, power storage devices for storing surplus power or renewable energy, and backup power storage devices.

The secondary batteries are generally manufactured in a way that an electrode active material slurry is applied to a positive electrode current collector and a negative electrode current collector to form an electrode active material layer, which is then subjected to drying and rolling to prepare a positive electrode and a negative electrode, and the positive electrode and the negative electrode are stacked on both sides of a separator to form an electrode assembly having a predetermined shape, and then the electrode assembly is accommodated in a battery case, an electrolyte is injected, and the battery case is sealed.

Meanwhile, as a solvent contained in the slurry evaporates in the process of drying the electrode active material slurry, defects, such as pinholes or cracks, may be generated in the electrode active material layer formed on the current collector. In addition, the electrode active material slurry is not dried uniformly at an internal portion and an external portion thereof, and thus a powder floating phenomenon may occur due to a difference in solvent evaporation rate. That is, powder present in a portion dried earlier may float and form a gap from a portion dried relatively later, resulting in degradation of electrode quality.

Therefore, to address the limitations described above, drying devices capable of controlling the evaporation rate of the solvent while allowing the inside and outside of the electrode active material slurry to be uniformly dried have been considered, but these drying devices are very expensive and require considerable cost and time for operation, and thus have poor manufacturing processability.

Meanwhile, the solvent contained in a typical electrode active material slurry is N-methyl-2-pyrrolidone (NMP), which has a high boiling point and thus requires high heat energy and a very long drying furnace to be dried, making it highly unsuitable for mass production. In addition, N-methyl-2-pyrrolidone (NMP) is a toxic substance and is harmful to living things, thereby failing to be environmentally friendly.

Therefore, there has been a recent trend of active research on dry electrodes in which electrodes are manufactured without using solvents. The dry electrode is generally manufactured by laminating a free-standing type electrode mixture film, which includes an electrode active material, a binder, or a conductive material and is prepared in a form of a sheet, on a current collector. The electrode mixture film involves a process in which an electrode active material, a carbon material as a conductive material, and a fibrillizable binder are first mixed and fibrillized, and a free-standing film is then prepared by calendering the obtained mixture into a film shape.

Meanwhile, applying high loading electrodes is required to increase the energy density of battery cells and improve cost competitiveness. However, increasing loading in dry electrodes leads to a decrease in battery cell performance due to increased diffusion resistance within the electrodes. In particular, poor fast charging performance and output characteristics are induced due to poor C-rates at high rates. In addition, during long-term charging and discharging, reactions may occur predominantly on an electrode surface, leading to localized degradation of the active material.

Accordingly, research is required on a dry electrode capable of improving diffusion resistance, output characteristics, and fast charging performance while increasing loading levels.

### DISCLOSURE OF THE INVENTION

### TECHNICAL PROBLEM

An aspect of the present invention provides an electrode that enables high loading with improved diffusion resistance through enhanced lithium ion mobility by ensuring that a three-dimensional fiber network structure formed from a binder within an electrode mixture film has relatively large voids in the interior and near the surface, and by allowing an electrolyte to be disposed in the voids.

Another aspect of the present invention provides a secondary battery exhibiting excellent output characteristics and fast charging performance by employing the electrode having improved diffusion resistance and lithium ion mobility.

### TECHNICAL SOLUTION

[1] According to an aspect of the present invention, there is provided an electrode including an electrode active material and a binder having a three-dimensional fiber network structure, and having a maximum instantaneous absorption rate of an electrolyte of 1.3 µg/s or more in electrolyte absorption analysis, the electrolyte absorption analysis is performed by including contacting a portion of one end of an electrode mixture film, cut to a width of 20 mm, with an electrolyte containing ethylene carbonate and ethyl methyl carbonate in a weight ratio of 45:55 (M1), and measuring electrolyte absorption amount of the electrode for up to 60 minutes using a tensiometer to obtain a graph of electrolyte absorption amount (µg) versus time (s) (M2), and the maximum instantaneous absorption rate of the electrolyte is derived from the graph.
[2] The present invention provides the electrode according to [1] above, wherein the electrode may have a section where the maximum instantaneous absorption rate of the electrolyte is 1.5 µg/s or more in electrolyte absorption analysis.
[3] The present invention provides the electrode according to [1] and/or [2] above, wherein in the electrode, a maximum instantaneous absorption rate of an electrolyte measured in a TD direction may be smaller than a maximum instantaneous absorption rate of an electrolyte measured in an MD direction.
[4] The present invention provides the electrode according to at least one of [1] to [3] above, wherein the electrode may have a loading level of 700 mg/25 cm2 or more and a porosity of 24% or less.
[5] The present invention provides the electrode according to at least one of [1] to [4] above, wherein the electrode active material may be a positive electrode active material, and the positive electrode active material may include a lithium composite metal compound containing at least one selected from the group consisting of nickel (Ni), cobalt (Co), manganese (Mn), and iron (Fe).
[6] The present invention provides the electrode according to at least one of [1] to [5] above, wherein the electrode active material may be a positive electrode active material, and the positive electrode active material may include a lithium metal phosphate-based compound represented by Formula 1 below.

   [Formula 1] Li₁₊ₓ[Fe_{1-y}M_{y}]PO₄

   In Formula 1 above, M includes at least one selected from the group consisting of Mn, Co, Ni, Al, Mg, and Ti, and x and y satisfy -0.5≤x≤0.5 and 0≤y<1.
[7] The present invention provides the electrode according to at least one of [1] to [6] above, wherein the binder may include polytetrafluoroethylene (PTFE).
[8] The present invention provides the electrode according to at least one of [1] to [7] above, wherein the electrode may include a current collector, and an electrode mixture film disposed on the current collector, and the electrode mixture film may include an electrode active material and a binder having a three-dimensional fiber network structure.
[9] According to another aspect of the present invention, there is provided a secondary battery including the electrode according to at least one of [1] to [8] above.

### ADVANTAGEOUS EFFECTS

In an electrode described in the present specification, a three-dimensional fiber network structure formed from a binder within an electrode mixture film contains voids larger than ordinary pores, which secures space for an electrolyte to reside after impregnation, thereby enhancing lithium ion mobility and improving the diffusion resistance of batteries. Furthermore, degradation of performance may be prevented even when increasing loading levels of electrodes or C-rates of cells, and localized degradation of an active material may be prevented as charge-discharge reactions may occur throughout the entire electrode, enabling high-energy-density cells exhibiting improved fast charging performance and output characteristics.

A secondary battery described in the present specification includes the electrode, and may thus provide a high-capacity battery having high energy density and may also exhibit excellent output and fast charging performance as degradation at high C-rates is suppressed.

### BRIEF DESCRIPTION OF THE DRAWINGS

FIG. 1 is a graph of electrolyte absorption amount over time measured in a TD direction for an electrode of Example 1;
FIG. 2 is a graph of electrolyte absorption amount over time measured in an MD direction for an electrode of Example 1;
FIG. 3 is a graph of electrolyte absorption amount over time measured in a TD direction for an electrode of Comparative Example 4; and
FIG. 4 is a graph of electrolyte absorption amount over time measured in an MD direction for an electrode of Comparative Example 4.

### MODE FOR CARRYING OUT THE INVENTION

Hereinafter, the present invention will be described in detail.

It will be understood that words or terms used herein and claims of the present invention shall not be construed as being limited to having the meaning defined in commonly used dictionaries. It will be further understood that the words or terms should be interpreted as having meanings that are consistent with their meanings in the context of the relevant art and the technical idea of the invention, based on the principle that an inventor may properly define the meaning of the words or terms to best explain the invention.

Herein, the term "volume cumulative average particle diameter D₅₀" indicates a particle diameter at a cumulative volume of 50% in a particle size distribution curve of particles. The D₅₀ may be measured, for example, by using a laser diffraction method. The laser diffraction method generally allows the measurement of a particle size ranging from a submicron level to a few mm and may produce highly repeatable and high-resolution results.

In this specification, the term "average particle diameter" indicates an arithmetic mean value of particle diameters which is calculated after measuring the particle diameters of at least 30 particles observed in a scanning electron microscope image when observed by using a scanning electron microscope with a field of view of 5,000 times to 20,000 times. In this case, the particle diameter indicates a diameter of a longest axis of the particle. Although measurement methods of the "volume cumulative average particle diameter D₅₀" and the "average particle diameter" are different, their values may be derived similarly, and the volume cumulative average particle diameter D₅₀ measured in a powder state may have a similar value within an error range to the average particle diameter observed in the scanning electron microscope image of an electrode after the powder is prepared into the electrode.

Herein, the term "material mixture composition" indicates a mixture including an electrode active material as well as a binder and optionally a conductive material, which is physically mixed to form a uniform dispersion phase, where it may be a mixture of powders, as a product of a mixing process according to this specification, and may be one in which substantially no solvent is involved. Herein, the fact that substantially no solvent is involved indicates that no solvent or only a trace amount of solvent is added when mixing the material mixture composition.

Herein, the term "mixed aggregate" indicates one in which the mixture of powders is converted into a dough-like aggregate by being bonded or connected to each other while the binder is fibrillized by applying a shear force to the material mixture composition, where it, as a product of a kneading process according to this specification, may have a solid content substantially close to 100% and may include a small amount of solvent in some cases.

Herein, the term "powder for an electrode" is a material in a state in which the mixed aggregate is ground to form powder by reducing a size of particles, where it may indicate an electrode material in a form of powder which includes the electrode active material as well as the binder and optionally the conductive material.

Herein, an "electrode material mixture film" may be one which is prepared in a form of a free-standing type single sheet using an "electrode material mixture" including the electrode active material, the conductive material, and the binder without a solvent involved, or may mean an electrode material mixture layer in a state of being laminated on the current collector. Herein, the term 'free-standing type' indicates one capable of maintaining a single form independent from other members and moving or handling by itself. The electrode material mixture film may be formed by pressing the powder for an electrode as described later. For example, the powder for an electrode may be integrated by pressing to form a layered structure.

Herein, the term "powder-sheeting film" indicates a film in the form of a sheet, which is prepared through a powder-sheeting process in which the powder for an electrode first passes through a pressing roll in a roll-to-roll process, and may be a free-standing type sheet. Herein, the 'powder-sheeting' means that the powder for an electrode is formed into the form of a sheet by the rolling roll of the roll-to-roll process, and 'sheeting' is a process performed in a process of preparing the electrode material mixture film from the powder-sheeting film, where it may mean a process of roll pressing the powder-sheeting film.

Herein, the term "three-dimensional fiber network structure" may indicate a structure that may be formed through fibrillization of a binder during the process of forming a sheet from a material mixture composition including an electrode active material and a binder into an electrode mixture film, and may refer to a structure in which a plurality of fibers are connected at a plurality of points in random directions. The three-dimensional fiber network structure may indicate various forms of structures serving as a support that enables an electrode mixture film to be a self-supporting film, with fine fibrous binder forming a skeleton. In this case, the electrode active material and optionally the conductive material may be accommodated in pores formed in the three-dimensional fiber network structure.

Herein, each of the electrode and the secondary battery including the same may include one or more of the technical features and/or technical components described below, and these technical features and/or technical components may be combined in various ways.

### Electrode

In an aspect, an electrode including an electrode active material and a binder having a three-dimensional fiber network structure, and having a maximum instantaneous absorption rate of an electrolyte of 1.3 µg/s or more in electrolyte absorption analysis may be provided. The electrolyte absorption analysis described above is performed by contacting a portion of one end of an electrode cut to a width of 20 mm with an electrolyte containing ethylene carbonate and ethyl methyl carbonate in a weight ratio of 45:55 (M1), and measuring an electrolyte absorption amount of the electrode for a maximum of 60 minutes using a tensiometer to obtain a graph of electrolyte absorption amount (µg) versus time (s) (M2).

In the case of dry electrodes, high loading of electrodes to improve cell energy density and secure cost competitiveness leads to various process-related issues due to increased electrode thickness, making the control of binder fibrillation level highly difficult. Furthermore, dry electrodes offer the effect of avoiding issues such as drying cracks, surface craters, binder migration, or poor adhesion that may occur during drying after coating in wet electrode manufacturing, but in a case of dry mixing, inevitably suffer from reduced uniformity and thus exhibit a relatively high presence of locally aggregated active materials and optionally included conductive materials, resulting in increased resistance. In particular, since high loading inevitably involves minimizing an increase in electrode thickness by lowering porosity, lithium ion mobility is reduced under low porosity, leading to an increase in diffusion resistance.

However, the electrode according to an aspect of the present specification has a section in which the electrolyte absorption amount significantly increases in the electrolyte absorption analysis, thereby enabling a dry electrode exhibiting reduced diffusion resistance even under high loading that increases electrode thickness and lowers porosity. That is, by implementing relatively large voids in addition to the pores generally formed in the three-dimensional fiber network structure inside the electrode mixture film, these voids serve to retain electrolyte, which significantly reduces the travel path of lithium ions and enables the dry electrode described above.

In a case where the electrode having reduced diffusion resistance is included in a secondary battery, despite increased capacity through high loading, excellent output and fast charging performance are exhibited due to stable charge-discharge performance at high C-rates, and improved lifespan is achieved by preventing localized degradation of active materials.

### Maximum instantaneous absorption rate of electrolyte

In an aspect, the electrode has a maximum instantaneous absorption rate of an electrolyte of 1.3 µg/s or more in electrolyte absorption analysis. The electrode having a maximum instantaneous absorption rate of an electrolyte of 1.3 µg/s or more may indicate the presence of relatively large voids within a three-dimensional fiber network structure formed by a binder. That is, even with the same porosity, a difference in the maximum instantaneous absorption rate of the electrolyte arises in electrolyte absorption analysis due to a difference in the internal structure, and such a difference may determine whether lithium ion mobility is improved.

In general, the presence of large voids in addition to the pores commonly present inside an electrode has been regarded as a defect, but the present inventors provide a dry electrode exhibiting significantly improved lithium ion mobility by controlling and utilizing such voids in an appropriate structure.

The maximum instantaneous absorption rate of the electrolyte measured in the electrolyte absorption analysis may be 1.3 µg/s or more, preferably 1.4 µg/s or more, 1.5 µg/s or more, 1.6 µg/s or more, or 1.8 µg/s or more, and more preferably, may include a section with 2.0 µg/s or more.

The maximum instantaneous absorption rate of the electrolyte refers to a value measured in a TD direction, a value measured in an MD direction, or an average of values measured in both directions. Furthermore, the maximum instantaneous absorption rate of the electrolyte measured in the TD direction may be smaller than the maximum instantaneous absorption rate of the electrolyte measured in the MD direction. A case where the maximum instantaneous absorption rate of the electrolyte measured from electrolyte absorption analysis satisfies the range described above indicates that voids are appropriately formed inside the electrode, and in this case, improvements in output, fast charging performance, and lifespan are achieved through the enhanced mobility of lithium ions.

The electrolyte absorption analysis described above may be performed by including contacting a portion of one end of an electrode cut to a width of 20 mm with an electrolyte containing ethylene carbonate and ethyl methyl carbonate in a weight ratio of 45:55 (M1), and measuring an electrolyte absorption amount of the electrode for a maximum of 60 minutes using a tensiometer to obtain a graph of electrolyte absorption amount (µg) versus time (s) (M2).

Step M1 of contacting an electrode sample with an electrolyte may involve cutting the sample to an appropriate size, for example, a width of 20 mm, and then immersing a portion of one end of the sample in an electrolyte to allow the electrolyte to be absorbed into the sample.

When the width of the sample is in the MD direction, a measurement value in the TD direction may be derived, and when the width is in the TD direction, a measurement value in the MD direction may be derived. The length of the sample may be cut to a length sufficient to measure an electrolyte absorption amount, and for example, may be a length of about 5 cm to 20 cm. Furthermore, the electrolyte absorption analysis evaluates the extent to which an electrode mixture film, which is an electrode mixture film corresponding to a mixture layer disposed on a current collector, absorbs an electrolyte, and when the sample includes the electrode mixture film, an effect according to whether the film is bonded to or separated from the current collector is substantially absent.

The electrolyte may include ethylene carbonate and ethyl methyl carbonate as organic solvents in a weight ratio of 45:55, and lithium salts and additives may be optionally included, but the presence of the lithium salts and additives does not change the absorption rate of the electrolyte. Furthermore, the meaning that the organic solvent containing ethylene carbonate and ethyl methyl carbonate in a weight ratio of 45:55 is used substantially includes a range in which the weight ratio varies by +/- about 10 wt%. For example, a case where the two solvents are included in a weight ratio ranging from 35:65 to 55:45 may be included. The two solvents are substantially organic solvents and are widely used, and exhibit a relatively fast absorption rate into electrodes or separators. Thus, the solvents have properties suitable for electrolyte absorption analysis and may provide more accurate simulation results in that the solvents are not significantly different from electrolyte components actually applied.

Step M2 of obtaining a graph of electrolyte absorption amount over time may involve measuring the extent to which a sample in which a portion of one end is immersed in the electrolyte absorbs the electrolyte over time and converting the measurements into a graph, and in this case, the measurement of electrolyte absorption amount over time may be performed using a tensiometer (e.g., equipment from SEO is applicable). A graph may be generated by measuring changes in electrolyte absorption amount over a time period, for example, for about 20 minutes to 30 minutes after the sample is brought into contact with the electrolyte.

The maximum instantaneous absorption rate (µg/s) of the electrolyte described above may be derived from the graph of electrolyte absorption amount (µg) versus time (s). The graph may be characterized by the observation of a section in which the electrolyte absorption amount per second is remarkably large. In general, there is no section in which the electrolyte absorption amount is constant or changes rapidly over time, but the electrode described in the present specification is characterized by the essential existence of a section in which the electrolyte absorption amount per second changes rapidly, and may be characterized in that the electrolyte absorption amount per second is an instantaneous absorption rate with a maximum value of about 1.3 µg/s or more.

In an aspect, the electrode is high-loaded, and even with high loading, the diffusion resistance is significantly improved as described above, ensuring that an issue regarding lithium ion mobility does not arise, thereby offering a significant benefit of enhancing both capacity and output performance. Specifically, the electrode mixture film of the dry electrode may have a loading level of 600 mg/25 cm2 or more, 630 mg/25 cm2 or more, 650 mg/25 cm2 or more, 670 mg/25 cm2 or more, 700 mg/25 cm2 or more, 720 mg/25 cm2 or more, 750 mg/25 cm2 or more, 770 mg/25 cm2 or more, or 800 mg/25 cm2 or more. Generally, in a case where the loading level is increased to the above range, an issue of increased diffusion resistance due to increased thickness arises, but since this issue may be resolved, a secondary battery exhibiting excellent performance may be provided even with an increased loading level.

The electrode mixture film may have a porosity of 17 vol% to 30 vol%, may preferably have a porosity of 19 vol% or more, or 20 vol% or more, and may also have a porosity of 29 vol% or less, 28 vol% or less, 27 vol% or less, 26 vol% or less, 25 vol% or less, 24 vol% or less, or 23 vol% or less. When the above range is satisfied, electrolyte impregnation is excellent, and accordingly, lifetime and output characteristics may be improved and energy density may be excellent.

Porosity may be calculated using Equation A below. 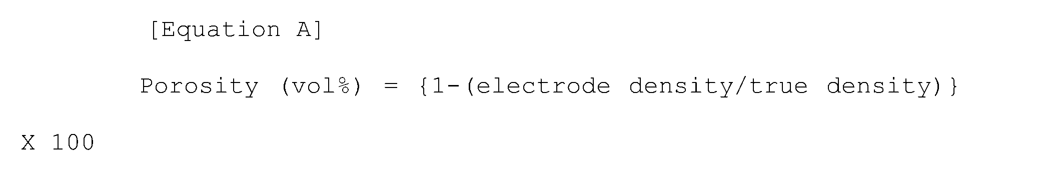 [Equation A] Porosity (vol%) = {1-(electrode density/true density)} X 100

In Equation A above, the true density is density of an electrode mixture film measured when the electrode mixture film is taken to a predetermined size and pressed with press equipment until changes in thickness of the film stop, and the electrode density is density of an electrode mixture film measured when the film is taken to a predetermined size.

In an aspect, the electrode mixture film may include an electrode active material and a binder, and optionally may further include a conductive material, where the binder has a three-dimensional fiber network structure, and the active material and optionally the conductive material may be accommodated in pores or voids formed within the three-dimensional fiber network structure. The electrode active material, the conductive material, and the binder will be described below.

### Electrode active material

In an aspect, there is no particular limitation on the electrode active material as long as it is a commonly used electrode active material, and, for example, the electrode active material may be a positive electrode active material or a negative electrode active material, and may preferably be a positive electrode active material.

The positive electrode active material is a compound capable of reversibly intercalating and deintercalating lithium, and may include a lithium composite metal compound containing at least one selected from the group consisting of nickel (Ni), cobalt (Co), manganese (Mn), and iron (Fe).

Specifically, the positive electrode active material may include a lithium composite transition metal oxide containing lithium and one or more types of metals such as cobalt, manganese, nickel, or aluminum. More specifically, the lithium composite transition metal oxide may be lithium-manganese-based oxide (e.g., LiMnO₂, LiMn₂O₄, and the like), lithium-cobalt-based oxide (e.g., LiCoO₂ and the like), lithium-nickel-based oxide (e.g., LiNiO₂ and the like), lithium-nickel-manganese-based oxide (e.g., LiNi_{1-Y}Mn_{Y}O₂ (where 0<Y<1), LiMn_{2-Z}Ni_{Z}O₄ (where 0<Z<2) and the like), lithium-nickel-cobalt-based oxide (e.g., LiNi_{1-Y1}Co_{Y1}O₂ (where 0<Y1<1) and the like), lithium-manganese-cobalt-based oxide (e.g., LiCo_{1-Y2}Mn_{Y2}O₂ (where 0<Y2<1), LiMn_{2-Z1}Co_{Z1}O₄ (where 0<Z1<2) and the like), lithium-nickel-manganese-cobalt-based oxide (e.g., Li(NiₚCo_{q}Mnᵣ)O₂ (where 0<p<1, 0<q<1, 0<r<1, and p+q+r=1) or Li(Niₚ₁Co_{q1}Mnᵣ₁)O₄ (where 0<p1<2, 0<q1<2, 0<r1<2, p1+q1+r1=2) and the like), or lithium-nickel-cobalt-transition metal (M) oxide (e.g., Li(Niₚ₂Co_{q2}Mnᵣ₂Mₛ₂)O₂ (where M is selected from the group consisting of Al, Fe, V, Cr, Ti, Ta, Mg, and Mo, and p2, q2, r2, and s2 are each an atomic fraction of independent elements, where 0<p2<1, 0<q2<1, 0<r2<1, 0<s2<1, and p2+q2+r2+s2=1 and the like), and any one thereof or a compound of two or more thereof may be included.

Among these materials, in terms of the improvement of capacity characteristics and stability of the battery, the lithium metal oxide may be LiCoO₂, LiMnO₂, LiNiO₂, lithium nickel manganese cobalt oxide (e.g., Li(Ni_{1/3}Mn_{1/3}Co_{1/3})O₂, Li(Ni_{0.6}Mn_{0.2}Co_{0.2})O₂, Li(Ni_{0.5}Mn_{0.3}Co_{0.2})O₂, Li(Ni_{0.7}Mn_{0.15}Co_{0.15})O₂, and Li(Ni_{0.8}Mn_{0.1}Co_{0.1})O₂), lithium nickel cobalt aluminum oxide (e.g., Li(Ni_{0.8}Co_{0.15}Al_{0.05})O₂, etc.), or lithium nickel manganese cobalt aluminum oxide (e.g., Li(Ni_{0.86}Co_{0.05}Mn_{0.07}Al_{0.02})O₂), and any one thereof or a mixture of two or more thereof may be used.

In addition, the positive electrode active material may include a lithium metal phosphate-based compound containing iron, and specifically, may be lithium iron phosphate, and may be represented by, for example, Formula 1 below.

[Formula 1] Li₁₊ₐFe₁₋ₓMₓPO₄

In Formula 1 above, M is at least one selected from the group consisting of Mn, Co, Ni, Al, Mg, and Ti, and a and x satisfy -0.5≤a≤0.5 and 0≤x<1.

When the positive electrode active material is a lithium metal phosphate-based compound, particularly lithium iron phosphate, the positive electrode active material ensures safety and, despite having a relatively smaller capacity compared to lithium nickel-based oxides, enables the realization of a dry electrode capable of high loading according to an embodiment of the present invention, and thus a secondary battery applying lithium iron phosphate with improved capacity and excellent safety while providing superior cost competitiveness may be achieved.

Meanwhile, the electrode active material may include a negative electrode active material, and the negative electrode active material may be a material capable of reversibly intercalating/deintercalating lithium ions, and may include, for example, at least one selected from the group consisting of: lithium metal; carbon-based active materials; metalloid-based active materials including Si or Sn; metal-based active materials including metals or alloys of these metals and lithium; metal composite oxides; and transition metal oxides.

As the carbon-based material, any material generally used in a lithium ion secondary battery may be used without particular limitation, and, as a typical example thereof, crystalline carbon, amorphous carbon, or a combination thereof may be used. Examples of the crystalline carbon may be graphite such as irregular, planar, flaky, spherical, or fibrous natural graphite or artificial graphite, and examples of the amorphous carbon (low crystalline) may be soft carbon (low-temperature fired carbon) or hard carbon, mesophase pitch carbide, and fired cokes.

The metalloid-based active material may include a silicon-based active material and/or a tin-based active material. The silicon-based active material may be selected from the group consisting of Si, SiOₓ (0<x≤2), and a Si-Y alloy (where Y is an element selected from the group consisting of alkali metals, alkaline earth metals, Group 13 elements, Group 14 elements, transition metals, rare earth elements, and a combination thereof, excluding Si). In addition, the tin-based active material may include Sn, SnO₂, and a Sn-Y alloy (where Y is an element selected from the group consisting of alkali metals, alkaline earth metals, Group 13 elements, Group 14 elements, transition metals, rare earth elements, and a combination thereof, excluding Sn), and may be used in a mixture of at least one of these and SiO₂. The element Y may be selected from the group consisting of Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, Ge, P, As, Sb, Bi, S, Se, Te, Po, and a combination thereof.

As the metal-based active material, metals selected from the group consisting of Cu, Ni, Na, K, Rb, Cs, Fr, Be, Mg, Ca, Sr, Si, Sb, Pb, In, Zn, Ba, Ra, Ge, Al, and Sn or alloys of lithium and these metals may be used.

One selected from the group consisting of PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, LiₓFe₂O₃ (0≤x≤1), LiₓWO₂ (0≤x≤1), and SnₓMe₁₋ₓMe'_{y}O_{z} (Me:Mn, Fe, Pb, or Ge; Me':Al, boron (B), P, Si, Groups I, II, and III elements of the periodic table, or halogen; 0<x≤1; 1≤y≤3; 1≤z≤8) may be used as the metal composite oxide.

The transition metal oxide may include lithium-containing titanium composite oxide (LTO), vanadium oxide, and lithium vanadium oxide.

Meanwhile, according to an embodiment of the present invention, the electrode active material may be included in an amount of 80 wt% to 99 wt%, preferably 85 wt% or more, 88 wt% or more, 90 wt% or more, 92 wt% or more, 93 wt% or more, or 95 wt% or more, and may also be included in an amount of 98.5 wt% or less, 98 wt% or less, or 97.5 wt% or less, with respect to a total weight of the electrode mixture film. When the electrode active material is included in the above range, it may be desirable both in terms of increasing capacity and energy density of the electrode and in terms of optimizing the function of the conductive material and the binder as auxiliary materials.

### Binder

In an aspect, the binder serves to form a three-dimensional fiber network structure that allows the electrode mixture film to take the form of a film. The binder is not specifically limited, as long as it is a fibrillizable material, that is, one which through fibrillization may form a three-dimensional fiber network structure within the electrode material mixture film and provide pores capable of accommodating an electrode active material and optionally a conductive material.

The fibrillization of the binder indicates a process of finely dividing a polymer applied as a binder, and may be performed, for example, by applying mechanical shear force or the like, and consequently, the surface is loosened and fibrillized, forming a plurality of fine fibers, and thereby including a three-dimensional fiber network structure.

The fibrillizable binder may preferably include at least one selected from the group consisting of polytetrafluoroethylene (PTFE) and polyolefin, more preferably include polytetrafluoroethylene (PTFE), and even more preferably may be polytetrafluoroethylene (PTFE). Specifically, the polytetrafluoroethylene (PTFE) may be included in an amount of 60 wt% or greater with respect to a total binder weight. In this case, the binder may further include at least one of polyethylene oxide (PEO), polyvinylidene fluoride (PVdF), polyvinylidene fluoride-hexafluoropropylene (PVdF-HFP), polyacrylic acid (PAA), polyvinyl pyrrolidone (PVP), or a polyolefin-based binder.

The fibrillizable binder may be included in an amount of 0.1 wt% to 10.0 wt%, preferably 0.2 wt% or more, 0.3 wt% or more, 0.5 wt% or more, 0.7 wt% or more, or 1.0 wt% or more, and may also be included in an amount of 9.0 wt% or less, 8.0 wt% or less, 7.0 wt% or less, or 5.0 wt% or less, with respect to the total weight of the electrode mixture film. When the fibrillizable binder is included within the above range, an issue of acting as resistance or an issue in the degree of fibrillation for manufacturing in the form of a free-standing sheet may not occur.

### Conductive material

In an aspect, the electrode mixture film may further include a conductive material, and the conductive material is a component for further improving the conductivity of the electrode active material, and is not particularly limited as long as it has conductivity without causing chemical changes in batteries, and for example, a conductive additive, such as: carbon black such as acetylene black, Ketjen black, channel black, furnace black, lamp black, or thermal black; graphite powder such as natural graphite with a well-developed crystal structure, or artificial graphite; conductive fibers such as carbon-based fibers (e.g., carbon nanotubes, carbon nanofibers, carbon fibers) or metal fibers; fluorocarbon powder; metal powder such as aluminum powder and nickel powder; conductive whiskers such as zinc oxide whiskers and potassium titanate whiskers; conductive metal oxide such as titanium oxide; or polyphenylene derivatives may be used. Specifically, the conductive material may include at least one selected from the group consisting of graphite powder, carbon black, and carbon nanotubes for uniform mixing of the conductive material and improvement of conductivity.

The conductive material may be included in an amount of 0.1 wt% to 10.0 wt% with respect to the total weight of the electrode mixture film. Preferably, the conductive material may be included in an amount of 0.2 wt% or more, 0.3 wt% or more, 0.5 wt% or more, or 0.7 wt% or more, and may also be included in an amount of 8.0 wt% or less, 6.0 wt% or less, or 5.0 wt% or less. A higher input amount of the conductive material may be more favorable for forming conductive pathways, but capacity may decrease due to a relative reduction in the amount of active material, and controlling the input amount is not easy due to dispersion issues. However, since the effect of forming conductive pathways may be maximized by optimizing dispersibility within the above range, applying the conductive material within the described range may be preferable.

### Current collector

In an aspect, the electrode may further include a current collector, and the electrode mixture film may be disposed on the current collector.

In the method of laminating the electrode mixture film on one or both sides of the current collector, the electrode mixture film of a cut size and the current collector may be pressed with a press, and the electrode mixture film may also be manufactured by lamination using a pressing roll that performs lamination via supply from a separate supply roll in a roll-to-roll process.

In a case in which the electrode is a positive electrode, the current collector is not particularly limited so long as it has conductivity without causing chemical changes in batteries. For example, stainless steel, aluminum, nickel, titanium, fired carbon, or aluminum or stainless steel that is surface-treated with one of carbon, nickel, titanium, silver, or the like may be used as the current collector.

In a case in which the electrode is a negative electrode, the current collector is not particularly limited as long as it has high conductivity without causing changes in batteries, and, for example, copper, stainless steel, aluminum, nickel, titanium, fired carbon, copper or stainless steel that is surface-treated with one of carbon, nickel, titanium, silver, or the like, an aluminum-cadmium alloy, or the like may be used.

The current collector may have a thickness of 3 µm to 100 µm, preferably 8 µm to 80 µm, but is not limited thereto. In addition, fine irregularities may be formed on a surface of the current collector to improve the adhesion of the mixture film.

The current collector may be entirely or partially coated with a conductive primer to lower surface resistance and improve adhesion. In this case, the conductive primer may include a conductive material and a binder, and the conductive material is not limited as long as the material is conductive, but may be, for example, a carbon-based material. The binder may include a fluorine-based binder (including PVDF and PVDF copolymer), an acryl-based binder, and an aqueous binder, which are soluble in solvents.

### Method for manufacturing electrode

In an aspect, a method for manufacturing an electrode includes mixing an electrode active material and a binder to prepare a mixture composition (S1); kneading the mixture composition while applying shear force to obtain a mixed aggregate (S2); pulverizing the mixed aggregate to obtain a powder for an electrode (S3); and roll-pressing the powder for an electrode to form the powder for an electrode into a sheet as an electrode mixture film (S4).

The description of the electrode active material and the binder, and the description of the characteristics observed from electrolyte absorption analysis are the same as the above, and thus detailed description will not be provided, and preparation processes for each step will be described below.

### Step S1

In an aspect, step S1 of the method for manufacturing the electrode may be mixing an electrode active material and a binder to obtain a mixture composition. In this case, the mixing is performed such that the electrode active material and the binder are uniformly distributed, optionally a conductive material may be further included, and the components are mixed in powder form without a solvent, and thus the mixing is not limited and may be performed through various methods as long as simple mixing is allowed. However, the present invention is manufactured as a dry electrode with no use of a solvent, and thus the mixing may be performed through dry mixing, and the materials may be added to a device such as a mixer or a blender and mixed.

In this case, the mixing may be performed in a mixer at 3,000 rpm to 20,000 rpm for 3 to 60 minutes, and preferably at 5,000 rpm to 15,000 rpm for 5 to 50 minutes. When the mixing is performed within the above range, the materials may be uniformly mixed, thereby improving battery performance. More specifically, the mixing rate may be 5,500 rpm or greater, 6,000 rpm or greater, or 6,500 rpm or greater, and may also be 14,000 rpm or less, 13,000 rpm or less, or 12,000 rpm or less. The mixing time may preferably be 40 minutes or less, 30 minutes or less, or 20 minutes or less.

The control conditions of the mixing process may determine how uniformly and well the binder is fibrillized in the subsequent kneading process of step S2, and when the mixing is not uniformly performed, even in a case where fibrillization occurs uniformly, non-uniform portions may be present on the entire side of a film, and thus, it may be desirable to perform the mixing process under the conditions described above.

The mixing speed and time may determine the mixing uniformity of electrode materials, and the position or amount of voids formed within the electrode during fibrillation may be determined by this uniformity, which may affect the characteristics revealed from electrolyte absorption analysis, and thus adjustment within an appropriate range may be preferred.

### Step S2

In an aspect, step S2 may include applying shear force to the mixture composition obtained in the mixing of step S1 for N minutes to form a mixed aggregate. That is, step S2 may be a fibrillization process of a binder using a binder capable of forming a three-dimensional fiber network structure.

The fibrillization process may be performed, for example, through mechanical milling or kneading, and is not particularly limited as long as the process is generally performed, but may preferably be performed through high temperature-low shear kneading, and may be performed, for example, through a kneader such as a twin-screw extruder. Through this kneading, the fibrillizable binder is fibrillized, and accordingly, the electrode active material powders or, optionally, powders containing a conductive material are combined or connected to form a mixed aggregate with a solid content of 100%.

The kneading may be performed at a rate of 10 rpm to 100 rpm, and preferably may be performed at a rate of 20 rpm to 70 rpm. In addition, the kneading time (N) may be 10 to 30 minutes, preferably 15 to 25 minutes. When the above range is satisfied, appropriate fibrillization may be performed, allowing the binder to be uniformly fibrillized overall and to form a structurally stable three-dimensional fiber network structure.

Furthermore, an amount of the mixture composition added to the kneader upon the kneading may also be controlled. For example, the mixture composition discharged from the mixing process may be added in an amount of 80 vol% to 250 vol% with respect to an internal volume of a mixer such as a kneader, and the amount may be preferably 90 vol% or more, 100 vol% or more, 110 vol% or more, 120 vol% or more, or 130 vol% or more, and may also be 240 vol% or less, 230 vol% or less, 220 vol% or less, 210 vol% or less, or 200 vol% or less.

The volume ratio of the mixture composition to the internal volume of the kneader may be measured when the volume of the mixture composition is at normal pressure. For example, the mixture composition in a powder state may have a bulk density of less than 1.0 kg/L. For example, assuming that the bulk density of the powder is 0.46 kg/L, when 10 kg is added, the injection volume becomes 21.7 L, and in this case, when the internal volume of the kneader is 10 L, the volume percentage may be 217 vol%. Since the bulk density of the mixture composition in a powder state is low, it may be compressed twofold or more, and accordingly, the volume percentage may be controlled by considering the bulk density of the powder, the internal volume of the kneader, the degree of compression of the powder, or the like.

In addition, the kneading may be performed at high temperature and normal pressure or higher, and specifically, may be performed at pressure higher than normal pressure.

More specifically, the kneading may be performed at 50 °C to 230 °C, desirably at 90 °C to 200 °C. When the kneading is performed at a high temperature in the above range, fibrillization of the binder and lump formation through kneading may be well performed, and breakage of the binder subjected to fibrillization may be appropriately prevented.

In addition, the kneading may be performed at normal pressure or higher, specifically at a pressure of 1 atm to 3 atm, more specifically at a pressure of 1.1 atm to 3 atm. When the kneading is performed within the above range, breakage of the binder subjected to fibrillization may be appropriately prevented, and an aggregate may be prevented from having an excessively high density.

The conditions of a series of mixing processes as described above represent a process where fibrillation of the binder occurs most actively in the overall process, and since the position, amount, and arrangement of pores or voids within the electrode may be determined in the process, adjustment within the described range may be preferred.

### Step S3

In an aspect, step S3 includes pulverizing the mixed aggregate prepared through the kneading process to obtain a powder for an electrode.

The mixed aggregate prepared through the kneading may be directly pressed and molded into a sheet (sheeting such as calendering process), but in this case, the aggregate may be pressed at strong pressure and high temperature to form a thin film, and accordingly, the film may have an excessively high density or a uniform film is not obtainable. Therefore, the mixed aggregate prepared as above is pulverized to prepare a powder for an electrode.

An instrument used for the pulverization is not particularly limited, but the pulverization may preferably be performed using an instrument such as a blender or grinder.

The pulverizing may be performed at a rate of 1,000 rpm to 15,000 rpm for 5 seconds to 30 minutes, preferably at a rate of 3,000 rpm to 8,000 rpm for 30 seconds to 15 minutes. When the pulverizing is performed within the above range, sufficient pulverization may be achieved to prepare powder of an appropriate size for forming a film, and a large amount of fine powder may not be generated in the aggregate.

The pulverization process described above enables the powder-sheeting process to proceed smoothly in the subsequent sheet-forming process, while the position, amount, and arrangement of pores or voids within the electrode may be determined according to the degree of the pulverization. Accordingly, it may be desirable to control the process to satisfy the conditions described above.

The powder for an electrode may have an average particle diameter of 10 µm to 3,000 µm, specifically 50 µm to 1,500 µm, more specifically 100 µm to 700 µm. When the above range is satisfied, an electrode mixture film having uniform thickness and density may be formed, and excellent electrode mixture film physical properties may be obtained,

Meanwhile, the powder for an electrode may, although not essential, further include fillers to suppress expansion of the electrode. The filler is not particularly limited as long as it is a fibrous material that does not cause chemical changes in batteries, but, for example, the filler may include at least one selected from olefin polymers such as polyethylene and polypropylene; and fibrous materials such as glass fibers and carbon fibers.

### Step S4

In an aspect, step S4 includes forming the powder for an electrode into a sheet through roll pressing.

Step S4 may be a process of preparing an electrode mixture film in the form of a free-standing sheet by thermally compressing the powder for an electrode obtained as described above using pressing roll in a roll-to-roll process including two or more pairs of pressing rolls.

The roll-to-roll process may include a roll press unit where roll pressing is performed, and the roll press unit may be one in which a pair of pressing rolls are disposed to face each other, or one in which a plurality of pressing rolls may be continuously disposed to be in contact with each other. When the plurality of pressing rolls are continuously disposed, the temperatures and tip speed ratio (the rotation speed ratio of a pair of rolls) of each roll may be the same or different.

Step S4 may include step S4a of pre-sheeting the powder for an electrode to obtain a powder-sheeting film, and step S4b of sheeting the powder-sheeting film two or more times to prepare a mixture film. That is, after the powder is converted into a sheet in step S4a, step S4b may be performed to roll the sheet to enhance strength and satisfy the porosity and loading amount required for the electrode.

Regarding the temperature (T) of the pressing roll where the powder for an electrode is initially introduced, the temperature of the pressing roll where the powder-sheeting film is prepared in step S4a may be important, and the temperature of the pressing roll may be 40°C to 150°C. Preferably, the temperature may be 45°C or more, 50°C or more, 55°C or more, 60°C or more, 65°C or more, or 70°C or more, and may be up to 100°C. When the above range is satisfied, the powder for an electrode containing the fibrillated binder during kneading may be formed into a sheet, and the powders may be more organically connected to each other, and accordingly, the overall binder matrix structure may be formed solidly and uniformly.

A peripheral speed ratio between the pressing rolls provided in the roll-to-roll process of the step S4 may be appropriately adjusted each independently within a range of 1:1 to 1:10. The peripheral speed ratio between the rolls during the powder-sheeting in step S4a may be 1:1.5 to 1:4, and may preferably be controlled to 1:1.5 to 1:3.5 or 1:1.5 to 1:2.5.

The powder-sheeting film prepared through the powder-sheeting undergoes one or more cycles of thermo-compression through the sheeting process (calendering) of step S4b for reasons such as additional fibrillation, securing mechanical properties, or controlling porosity. In this case, the peripheral speed ratio between rolls is appropriately applied within the range of the peripheral speed ratio in powder-sheeting, and the number of cycles is also appropriately controlled according to target physical properties.

Lamination of a current collector and an electrode mixture film may be performed in the middle or at the end of one or more thermo-compression processes of step S4 (S4a and S4b). The lamination may be a step of attaching the electrode mixture film onto the current collector through roll pressing, and the lamination may be performed by a roll press method using lamination rollers. In this case, the lamination rollers may be maintained at a temperature of 20°C to 200°C.

The lamination may desirably be performed after at least one thermo-compression operations, and then a post-roll pressing process may be performed through one or more additional thermo-compression operations to achieve a desired porosity. When performing the post-roll pressing process in such a manner, the appearance of an electrode and the processability of calendering may be superior compared to lowering the porosity in a state of a mixture film prior to lamination, and the post-roll pressing process may also contribute to improving lithium ion mobility by enhancing the absorption characteristics of an electrolyte. Porosity control through additional heat pressing may be achieved by controlling the compression ratio with roll gap adjustment, which may be derived using Relational Expression 2 below. 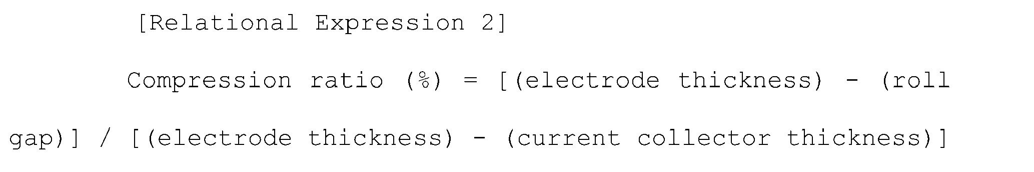 [Relational Expression 2] Compression ratio (%) = [(electrode thickness) - (roll gap)] / [(electrode thickness) - (current collector thickness)]

The compression ratio may be, for example, 35% to 70%, preferably 40% or more, 42% or more, 45% or more, 47% or more, or 48% or more, and may also be 68% or less, 65% or less, 63% or less, 60% or less, or 59% or less.

In performing step S4, controlling the gap between rolls, the peripheral speed ratio, and the roll temperature during powder-sheeting in step S4a, and controlling the number of calendering cycles during sheeting in step S4b and the compression ratio through the post-roll pressing process after lamination significantly affect the maximum instantaneous absorption rate of the electrolyte in the dry electrode as shown by electrolyte absorption analysis.

Appropriate control of the means induces the formation of relatively large voids within the electrode mixture film of the dry electrode and enables a dry electrode having such an internal structure, thereby providing a secondary battery exhibiting improved performance.

For example, in performing step S4, two or more cycles of roll pressing are performed at a peripheral speed ratio of 1:1.5 to 1:2, or one or more cycles of roll pressing are performed at a peripheral speed ratio of 1:2 or more. From powder-sheeting to calendering and lamination, controlling the peripheral speed ratio between rolls included in the powder-sheeting process of step S4a and the calendering process of step S4b as described above may be preferred. In this case, the three-dimensional fiber network structure formed through fibrillation of the binder during mixing (pre-mixing) and kneading processes undergoes bonding and additional fibrillation during the sheet-forming process to appropriately form voids within a finally formed three-dimensional fiber network structure, thereby improving lithium ion mobility.

### Lithium secondary battery

In an aspect, a secondary battery may include the dry electrode described above. For example, the secondary battery may include a secondary battery including a liquid electrolyte and an all-solid-state battery including a solid electrolyte.

In an aspect, the secondary battery, as a secondary battery including a liquid electrolyte, may include a separator between a plurality of electrodes. The separator separates the negative electrode and the positive electrode and provides a movement path of lithium ions, where any separator may be used as the separator without particular limitation as long as it is typically used in a secondary battery, and particularly, a separator having high moisture-retention ability for an electrolyte as well as low resistance to the transfer of electrolyte ions is desirable. Specifically, a porous polymer film, for example, a porous polymer film manufactured using a polyolefin-based polymer such as an ethylene homopolymer, a propylene homopolymer, an ethylene/butene copolymer, an ethylene/hexene copolymer, or an ethylene/methacrylate copolymer, or a stacked structural body having two or more layers thereof may be used. In addition, a typical porous nonwoven fabric, for example, a nonwoven fabric formed of glass fiber having a high melting point or polyethylene terephthalate fiber may be used. Furthermore, a coated separator including a ceramic component or a polymer material may be used to secure heat resistance or mechanical strength, and a separator having a single-layer structure or a multi-layer structure may be optionally used.

When the secondary battery is an all-solid-state battery, the solid electrolyte membrane may be prepared to perform the function of the separator.

As the electrolyte, an organic liquid electrolyte, an inorganic liquid electrolyte, a solid polymer electrolyte, a gel-type polymer electrolyte, an inorganic solid electrolyte, a molten-type inorganic electrolyte, or the like that is usable in the manufacture of a secondary battery may be selected without particular limitation.

The electrolyte may include an organic solvent and a lithium salt. The organic solvent may be used without particular limitation as long as it may serve as a medium through which ions involved in an electrochemical reaction of a battery may move. Specifically, as the organic solvent, an ester-based solvent such as methyl acetate, ethyl acetate, γ-butyrolactone, and ε-caprolactone; an ether-based solvent such as dibutyl ether or tetrahydrofuran; a ketone-based solvent such as cyclohexanone; an aromatic hydrocarbon-based solvent such as benzene and fluorobenzene; a carbonate-based solvent such as dimethyl carbonate (DMC), diethyl carbonate (DEC), methylethylcarbonate (MEC), ethylmethyl carbonate (EMC), ethylene carbonate (EC), and propylene carbonate (PC); an alcohol-based solvent such as ethyl alcohol and isopropyl alcohol; nitriles such as R-CN (wherein R is a linear, branched, or cyclic C2 to C20 hydrocarbon group and may include a double-bond aromatic ring or ether bond); amides such as dimethylformamide; dioxolanes such as 1,3-dioxolane; or sulfolanes may be used. Among these, the carbonate-based solvent is preferred, and a mixture of a cyclic carbonate (e.g., ethylene carbonate or propylene carbonate) having high ion conductivity and a high dielectric constant, which may increase charge/discharge performance of the battery, and a low-viscosity linear carbonate-based compound (e.g., ethylmethyl carbonate, dimethyl carbonate, diethyl carbonate, or the like) is more preferred.

The lithium salt may be used without particular limitation as long as it is a compound capable of providing lithium ions used in the secondary battery. To be specific, an anion of the lithium salt may be at least one selected from the group consisting of F-, Cl-, Br-, I-, NO₃-, N(CN)₂-, BF₄-, CF₃CF₂SO₃-, (CF₃SO₂)₂N-, (FSO₂)₂N-, CF₃CF₂(CF₃)₂CO-, (CF₃SO₂)₂CH-, (SF₅)₃C-, (CF₃SO₂)₃C-, CF₃(CF₂)₇SO₃-, CF₃CO₂-, CH₃CO₂-, SCN-, and (CF₃CF₂SO₂)₂N-, and as the lithium salt, LiPF₆, LiClO₄, LiAsF₆, LiBF₄, LiSbF₆, LiAlO₄, LiAlCl₄, LiCF₃SO₃, LiC₄F₉SO₃, LiN(C₂F₅SO₃)₂, LiN(C₂F₅SO₂)₂, LiN(CF₃SO₂)_{2.} LiCl, LiI, or LiB(C₂O₄)₂ may be used. The lithium salt may be used in a concentration range of 0.1 M to 4.0 M, preferably 0.5 M to 3.0 M, and more preferably 1.0 M to 2.0 M. When the concentration of the lithium salt is included within the above range, since the electrolyte may have appropriate conductivity and viscosity, excellent performance of the electrolyte may be obtained and lithium ions may effectively move.

To improve lifespan characteristics of batteries, suppress the reduction in battery capacity, and improve discharge capacity of the battery, at least one additive, for example, a halo-alkylene carbonate-based compound such as difluoroethylene carbonate, pyridine, triethylphosphite, triethanolamine, cyclic ether, ethylenediamine, n-glyme, hexaphosphorictriamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above electrolyte components. In this case, the additive may be included in an amount of 0.1 wt% to 10.0 wt% with respect to a total weight of the electrolyte.

### Battery box

In another aspect, a battery box including a plurality of the secondary batteries may be provided. The battery box may include a plurality of the secondary batteries and a packaging accommodating the plurality of the secondary batteries. In this case, the battery box may be, for example, a battery module or a battery pack.

The secondary battery stably exhibits excellent discharging capacity, output properties, and capacity retention, and thus, are useful for portable devices such as mobile phones, notebook computers, and digital cameras, and in the field of electric cars such as full electric vehicles (FEVs) and hybrid electric vehicles (HEVs).

The battery box may be used as at least one power supply selected from the group consisting of power tools; electric cars including full electric vehicles (FEVs), hybrid electric vehicles (HEVs), and plug-in hybrid electric vehicles (PHEVs); or power storage systems.

According to the present specification, in another aspect, an electrical or electronic device including the battery box as a power supply may be provided.

### Examples

Hereinafter, examples of the present invention will be described in detail in such a manner that it may easily be performed by a person with ordinary skill in the art to which the present invention pertains. The invention may, however, be embodied in many different forms and should not be construed as being limited to the examples set forth herein.

### Example 1

940 g of LiFePO₄ as a positive electrode active material, 20 g of carbon black as a conductive material, and 40 g of polytetrafluoroethylene (PTFE) as a binder were placed in a blender and mixed for 10 minutes to prepare a mixture composition. Then, the mixture composition was placed in a kneader and kneaded at a temperature of 180°C and a rotation speed of 25 rpm for 5 minutes to prepare an aggregate. The aggregate was then pulverized in a blender at a speed of 10,000 rpm for 1 minute to prepare a powder for an electrode.

Thereafter, in the roll-to-roll process, the powder for an electrode was placed into a lab roll press (roll diameter: 200 mm, roll temperature: 100°C, speed ratio: 20/40 rpm) and powder-sheeted to prepare a powder-sheeting film, and then calendering was performed twice at a speed ratio of 20/30 rpm, and lamination was performed with an aluminum foil coated with a conductive primer such that an electrode mixture film was disposed on the aluminum current collector. Then, a post-roll pressing process was performed at a peripheral speed ratio of 1:1 to manufacture a dry electrode (loading level: 600 mg/25 cm2, porosity: 26%) having a compression ratio of 48%.

### Example 2

A dry electrode (loading level: 600 mg/25 cm2, porosity: 26%) was manufactured in the same manner as in Example 1, except that the powder for an electrode was placed into a roll press having a speed ratio of 20/45 rpm during powder sheeting.

### Example 3

A dry electrode (loading level: 630 mg/25 cm2, porosity: 25%) was manufactured in the same manner as in Example 1, except that the powder for an electrode was placed into a roll press having a speed ratio of 20/30 rpm during powder sheeting and a post-roll pressing process was performed to achieve a compression rate of 54%.

### Example 4

A dry electrode (loading level: 630 mg/25 cm2, porosity: 24%) was manufactured in the same manner as in Example 1, except that the powder for an electrode was placed into a roll press having a speed ratio of 20/30 rpm during powder sheeting and a post-roll pressing process was performed to achieve a compression rate of 59%.

### Example 5

A dry electrode (loading level: 650 mg/25 cm2, porosity: 25%) was manufactured in the same manner as in Example 1, except that the powder for an electrode was placed into a roll press having a speed ratio of 20/40 rpm during powder sheeting and a peripheral speed ratio was set to 20/25 rpm during two times of calendering.

### Example 6

A dry electrode (loading level: 630 mg/25 cm2, porosity: 23%) was manufactured in the same manner as in Example 1, except that the powder for an electrode was placed into a roll press having a speed ratio of 20/24 rpm during powder sheeting, a peripheral speed ratio was set to 20/40 rpm during two times of calendering, an additional calendering was performed at a peripheral speed ratio of 20/22 rpm, and a post-roll pressing process was not performed.

### Comparative Example 1

A dry electrode (loading level: 600 mg/25 cm2, porosity: 26%) was manufactured in the same manner as in Example 1, except that the powder for an electrode was placed into a roll press having a speed ratio of 20/24 rpm during powder sheeting and three times of additional calendering were performed at a speed ratio of 20/24 rpm.

### Comparative Example 2

A dry electrode (loading level: 630 mg/25 cm2, porosity: 24%) was manufactured in the same manner as in Example 1, except that the powder for an electrode was placed into a roll press having a speed ratio of 20/28 rpm during powder sheeting, two times of additional calendering were performed at a speed ratio of 20/28 rpm, and a post-roll pressing process was performed to achieve a compression rate of 59%.

### Comparative Example 3

A dry electrode (loading level: 650 mg/25 cm2, porosity: 25%) was manufactured in the same manner as in Example 1, except that the powder for an electrode was placed into a roll press having a speed ratio of 20/24 rpm during powder sheeting and two times of additional calendering were performed at a speed ratio of 20/24 rpm.

### Comparative Example 4

940 g of LiFePO₄ as a positive electrode active material, 20 g of carbon black as a conductive material, and 40 g of polyvinylidene fluoride (PVDF) as a binder were mixed in an N-methylpyrrolidone (NMP) solvent to prepare a positive electrode slurry. Thereafter, the positive electrode slurry was applied onto a current collector such that a loading level was 600 mg/25 cm2, and dried and roll pressed at an average temperature of 150°C to manufacture a positive electrode having a porosity of 26%.

### Comparative Example 5

A dry electrode was manufactured in the same manner as in Example 1, except that 940 g of LiFePO₄ as a positive electrode active material, 20 g of carbon black as a conductive material, and 40 g of polytetrafluoroethylene (PTFE) as a binder were placed in a blender and mixed for 1 minute to prepare a mixture composition. In the case of Comparative Example 5, due to insufficient mixing, fibrillation was not properly performed from the kneading process, resulting in severe cracks at the side portions of a final electrode and the electrode being uneven with visible stains on a surface. Consequently, manufacturing a high-quality electrode was not achievable.

### Comparative Example 6

An attempt was made to manufacture a dry electrode in the same manner as in Example 1, except that a pulverizing process was not performed. However, in Comparative Example 6, due to the absence of the pulverizing process, a large number of large particles were produced, and thus forming a sheet-shaped film was not achievable during the powder sheeting process.

### Experimental Example 1: Electrolyte absorption analysis

The positive electrodes manufactured in Examples and Comparative Examples were cut to a width of 20 mm and a length of 100 mm, and one end of the cut electrode mixture film was immersed in an electrolyte by approximately 0.01 mm. In this case, a mixed solvent in which ethyl carbonate and ethyl methyl carbonate were mixed at a weight ratio of 45:55 was used as the electrolyte.

From the moment the cut electrode mixture film sample was immersed in the electrolyte, electrolyte absorption amount absorbed (µg) by the electrode mixture film was measured through weight change for 20 minutes using a tensiometer (SEO Co.), and a graph of the electrolyte absorption amount (µg) versus time (s) was obtained. This procedure was repeated 10 times with samples from different locations, and the average value thereof was used.

**[Table 1]**

| | Maximum instantaneous absorption rate of electrolyte (µg/s) | |
|---|---|---|
| | Average in TD direction | Average in MD direction |
| Example 1 | 2.10 | 2.51 |
| Example 2 | 2.21 | 2.75 |
| Example 3 | 1.89 | 1.92 |
| Example 4 | 1.58 | 1.66 |
| Example 5 | 2.52 | 2.78 |
| Example 6 | 2.55 | 3.05 |
| Comparative Example 1 | 0.51 | 0.62 |
| Comparative Example 2 | 0.77 | 0.68 |
| Comparative Example 3 | 0.49 | 0.57 |
| Comparative Example 4 | 0.42 | 0.65 |
| Comparative Example 5 | N/A | N/A |
| Comparative Example 6 | N/A | N/A |

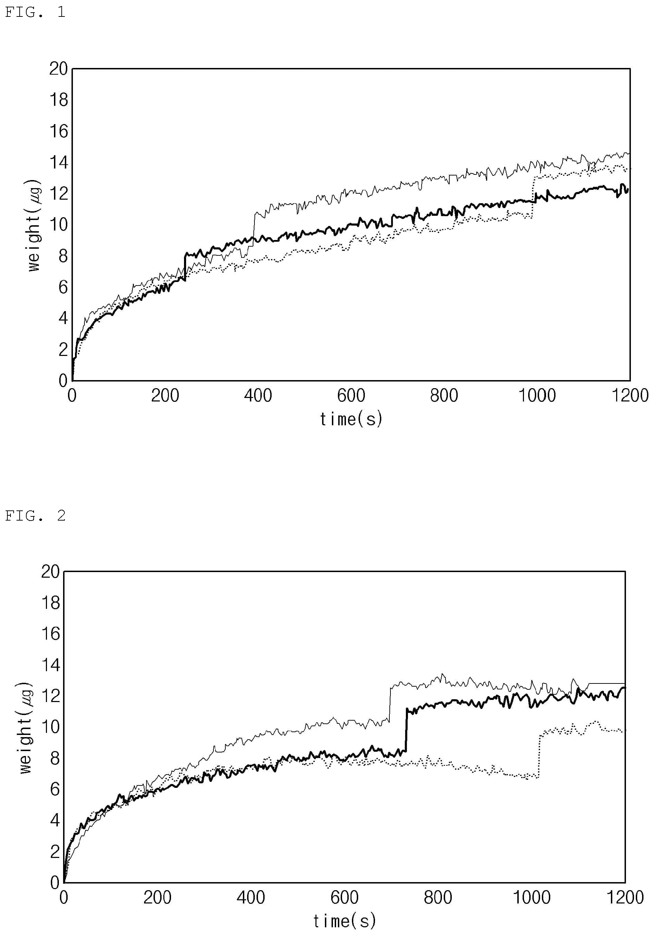

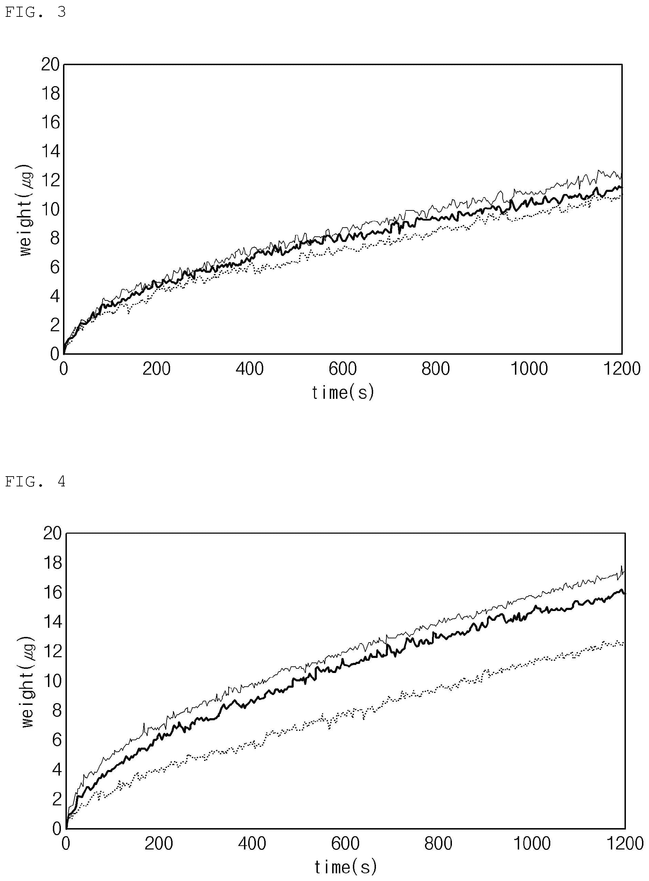

Referring to Table 1, in the case of Examples 1 to 6, a moment when the maximum instantaneous absorption rate of the electrolyte was 1.3 µg/s or more was observed in both MD and TD directions. It was confirmed that the electrolyte was consistently absorbed in all sections except for the section where the maximum instantaneous absorption rate was observed, and the results are shown in FIGS. 1 and 2. FIG. 1 is a graph of electrolyte absorption amount versus time measured in a TD direction of Example 1, showing the results of three measurements. FIG. 2 is a graph of electrolyte absorption amount versus time measured in an MD direction of Example 1, showing the results of three measurements. As observed in the graphs, there is a section where the absorption amount increases instantaneously. Conversely, in the case of Comparative Examples 1 to 3, a moment when the maximum instantaneous absorption rate of the electrolyte exceeded 1.0 µg/s was not observed because the peripheral speed ratio of rolls during powder-sheeting, the peripheral speed ratio during additional calendering, the compression ratio, and the final porosity were not properly controlled. In addition, Comparative Example 4, which is an electrode manufactured by a wet process, exhibited no moment when the maximum instantaneous absorption rate of the electrolyte is 1.3 µg/s or more, similar to Comparative Examples 1 to 3. The electrolyte was absorbed into the sample at a constant rate throughout the entire section, as confirmed through FIGS. 3 and 4. FIG. 3 is a graph of electrolyte absorption amount versus time measured in a TD direction for a wet electrode of Comparative Example 4, and FIG. 4 is a graph of electrolyte absorption amount versus time measured in an MD direction for a wet electrode of Comparative Example 4. As observed in the graphs of FIGS. 3 and 4, unlike the graphs of FIGS. 1 and 2 of Example 1, no section where the absorption amount significantly increases is observed except for changes at a noise level, and the graphs show a constant upward trend.

### Experimental Example 2: Evaluation of battery performance

**1) Manufacture of secondary battery**: Artificial graphite was used as a negative electrode active material. A negative electrode was prepared including a negative electrode active material layer containing the negative electrode active material, CMC and SBR as negative electrode binders, and carbon black as a negative electrode conductive material at a weight ratio of 96.7:2.8:0.5. The negative electrode active material layer had a weight loading of 290 mg/25 cm2 and a thickness of 72 µm, and copper foil having a thickness of 8 µm was used as the negative electrode current collector.

The dry positive electrodes of Examples and Comparative Examples, the negative electrode, and a porous polyethylene separator were assembled using a winding method, and an electrolyte (ethylene carbonate (EC)/ethyl methyl carbonate (EMC) = 3/7 (volume ratio) and lithium hexafluorophosphate (1 mole of LiPF₆) were injected into the assembled battery to prepare a secondary battery.

The secondary battery was charged up to 3.6 V at a C-rate of 0.1 C and then discharged up to 2.5 V to perform an activation process.

**2) Battery resistance (mΩ):** The secondary battery was charged and discharged, and then fully charged and discharged again, a 2.5 C pulse current was applied to the secondary battery for a specific period according to the change in SOC to measure diffusion resistance (@30 s), DCIR (0.1 s, @ SOC 30%), and 10 s resistance. The diffusion resistance was determined by calculating a difference between the 10 s resistance and the DCIR value.

**3) Relative charge capacity (%) and relative discharge capacity (%):** The secondary battery was charged up to 3.6 V in CCCV mode at 0.33 C (cut-off current: 0.05 C) to measure the initial charge capacity, and then discharged up to 2.5 V at a constant current of 0.2 C, and charged and discharged while the C-rate was increased to 2 C to measure each capacity. In this case, the measured charge capacity and discharge capacity were expressed as relative ratios to the initial charge capacity.

**[Table 2]**

| | Loading level (mg/25 cm²) | Porosity (vol%) | DCIR (mΩ) | Diffusion resistance (mΩ) | Initial charge capacity (mAh) | Relative charge capacity (%) | Relative discharge capacity (%) |
|---|---|---|---|---|---|---|---|
| Example 1 | 600 | 26 | 710 | 339 | 110 | 89.5 | 83.3 |
| Example 2 | 600 | 26 | 685 | 334 | 111 | 90.7 | 83.6 |
| Comparative Example 1 | 600 | 26 | 728 | 356 | 111 | 80.6 | 77.6 |
| Comparative Examples 4 (wet) | 600 | 26 | 763 | 366 | 109 | 76.1 | 74.5 |

**[Table 3]**

| | Loading level (mg/25 cm²) | Porosity (vol%) | DCIR (mΩ) | Diffusion resistance (mΩ) | Initial charge capacity (mAh) | Relative charge capacity (%) | Relative discharge capacity (%) |
|---|---|---|---|---|---|---|---|
| Example 3 | 630 | 25 | 717 | 345 | 115 | 84.6 | 77.2 |
| Example 4 | 630 | 24 | 722 | 351 | 115 | 82.4 | 75.2 |
| Example 6 | 630 | 24 | 692 | 321 | 113 | 95.3 | 84.6 |
| Comparative Example 2 | 630 | 24 | 735 | 363 | 115 | 78.2 | 71.4 |

**[Table 4]**

| | Loading level (mg/25 cm²) | Porosity (vol%) | DCIR (mΩ) | Diffusion resistance (mΩ) | Initial charge capacity (mAh) | Relative charge capacity (%) | Relative discharge capacity (%) |
|---|---|---|---|---|---|---|---|
| Example 5 | 650 | 25 | 712 | 337 | 120 | 81.1 | 73.5 |
| Comparative Example 3 | 650 | 25 | 732 | 360 | 120 | 77.0 | 69.9 |
| Comparative Example 5 | N/A | N/A | N/A | N/A | N/A | N/A | N/A |
| Comparative Example 6 | N/A | N/A | N/A | N/A | N/A | N/A | N/A |

Referring to Table 2, in the case of Examples 1 and 2 compared to Comparative Examples 1 and 4, resistance values were significantly reduced, and in particular, diffusion resistance was reduced by about 10%. In the case of Examples 1 and 2 compared to Comparative Example 4 to which a wet electrode was applied, the relative charge capacity was higher by 10 %p or more even at a high C-rate, confirming an excellent ability to maintain capacity even during fast charging. Furthermore, the relative discharge capacity at a high C-rate was also higher by about 10 %p, confirming that output was also significantly superior.

## Claims

1. An electrode comprising an electrode active material and a binder having a three-dimensional fiber network structure, and having a maximum instantaneous absorption rate of an electrolyte of 1.3 µg/s or more in electrolyte absorption analysis,
wherein the electrolyte absorption analysis is performed by including:
contacting a portion of one end of an electrode mixture film, cut to a width of 20 mm, with an electrolyte containing ethylene carbonate and ethyl methyl carbonate in a weight ratio of 45:55 (M1); and
measuring electrolyte absorption amount of the electrode mixture film for up to 60 minutes using a tensiometer to obtain a graph of electrolyte absorption amount (µg) versus time (s) (M2), and
the maximum instantaneous absorption rate of the electrolyte is derived from the graph.

2. The electrode of claim 1, wherein the maximum instantaneous absorption rate of the electrolyte is 1.5 µg/s or more.

3. The electrode of claim 1, wherein in the electrode, a maximum instantaneous absorption rate of an electrolyte measured in a TD direction is smaller than a maximum instantaneous absorption rate of an electrolyte measured in an MD direction.

4. The electrode of claim 1, wherein the electrode has a loading level of 600 mg/25 cm2 or more and a porosity of 26% or less.

5. The electrode of claim 1, wherein the electrode active material is a positive electrode active material, and
the positive electrode active material comprises a lithium composite metal compound containing at least one selected from the group consisting of nickel (Ni), cobalt (Co), manganese (Mn), and iron (Fe).

6. The electrode of claim 1, wherein the electrode active material is a positive electrode active material, and
the positive electrode active material comprises a lithium metal phosphate-based compound represented by Formula 1 below:
[Formula 1] Li₁₊ₐ[Fe₁₋ₓMₓ]PO₄
wherein in Formula 1 above, M comprises at least one selected from the group consisting of Mn, Co, Ni, Al, Mg, and Ti, and x and y satisfy -0.5≤x≤0.5 and 0≤y<1.

7. The electrode of claim 1, wherein the binder comprises polytetrafluoroethylene (PTFE).

8. The electrode of claim 1, wherein the electrode comprises a current collector, and the electrode mixture film disposed on the current collector, and
the electrode mixture film comprises an electrode active material and a binder having a three-dimensional fiber network structure.

9. A secondary battery comprising the electrode of claim 1.
